# FASCICULE DE BREVET EUROPEEN

(11) **EP 0 530 086 B1**
(45) Date de publication et mention de la délivrance du brevet: **27.03.1996**
(21) Numéro de dépôt: 92402320.3
(22) Date de dépôt: 21.08.1992
(51) Int. Cl.: C03B 23/035

(54) **Dispositif de bombage de feuilles de verre**
Vorrichtung zum Biegen von Glasscheiben
Apparatus for bending glass sheets

(30) Priorité: 27.08.1991 FR 9110646
(43) Date de publication de la demande: 03.03.1993
(73) Titulaire: SAINT-GOBAIN VITRAGE, F-92400 Courbevoie (FR)
(72) Inventeur: Lesage, Jean-Luc, F-60200 Compiègne (FR); Petitcollin, Jean-Marc, F-60150 Thourotte (FR); Borderiou, Arnaud, F-60200 Compiègne (FR); Franco, Thierry, F-60200 Compiègne (FR)
(74) Mandataire: Muller, René

(56) Documents cités:
- EP-A- 0 241 355
- FR-A- 2 606 398

## Description

L'invention a trait aux techniques de bombage et éventuellement de traitement thermique de feuilles de verre, utilisées notamment pour la production de vitrages automobiles.

Elle concerne plus particulièrement les techniques consistant à réchauffer les feuilles de verre jusqu'à leur température de ramollissement, puis à les bomber par application contre une forme supérieure de bombage par des moyens pneumatiques et/ou au moyen d'une forme inférieure, enfin à leur faire subir après bombage un refroidissement contrôlé.

Selon une de ces techniques, et plus précisément, la feuille traverse un four de réchauffage horizontal, convoyée sur un lit de rouleaux, pour être amenée dans une cellule de bombage où elle est soulevée des rouleaux, notamment grâce à une aspiration périphérique créé par un caisson de dépressurisation. L'ascension s'achève au contact de la face inférieure galbée de la forme supérieure de bombage, dont elle épouse plus ou moins la courbure sous l'effet de l'aspiration. Ce formage est ensuite complété soit sous l'action conjuguée de l'inertie et de la gravité par largage de la feuille sur une forme inférieure annulaire à profil courbe sur laquelle la feuille pourra être évacuée vers la cellule de trempe, soit par une opération de pressage mécanique de la feuille prise entre la forme supérieure et une forme inférieure annulaire, la feuille étant alors évacuée vers la cellule de trempe sur cette même forme ou sur une autre forme annulaire spécifiquement adaptée pour la trempe. On se rapportera notamment au brevet FR-B-2 085 464 et aux demandes de brevet EP-A-240 418, EP-A-241 355 et EP-A-255 432.

Cette technique de prise en charge de la feuille par aspiration périphérique est particulièrement avantageuse puisqu'elle permet de mettre en oeuvre un grand nombre de variantes de procédé de bombage, à partir d'une première étape identique de plus ou moins grand pré-formage contre la forme supérieure galbée.

On évite ainsi toute intervention de moyens mécaniques de soulèvement risquant d'entraîner un surlèvement localement préférentiel, source d'inévitables marques altérant la qualité optique des feuilles bombées.

Pour créer une différence de pression suffisante entre les deux faces de la feuille, on constitue donc une chambre de dépressurisation, fermée en haut par la forme pleine supérieure, en bas par la feuille, et latéralement par les parois d'un caisson sans fond usuellement désigné sous le terme de "jupe", la dépressurisation étant usuellement assurée par des trompes à air.

Différentes variantes concernant le dimensionnement et le positionnement relatifs de la forme pleine par rapport à la jupe existent. Ainsi, on connaît du brevet FR-B-2 085 464 des jupes profilées de manière à bien canaliser les fuites latérales. Dans ce cas, les formes supérieures sont entièrement logées dans la jupe, ceci afin d'optimiser l'efficacité de l'aspiration, notamment lors de l'instant critique de l'envol de la feuille.

Il a été également proposé dans les demandes de brevet EP-A-214 355 et EP-A-240 418 d'opérer avec une jupe "courte" laissant affleurante la face galbée de la forme supérieure, ce qui permet notamment d'éviter tout contact malencontreux entre les parois de la jupe et la feuille au cas où celle-ci présenterait un certain décentrage par rapport à la forme supérieure.

Mais quels que soient le profil de la jupe, le galbe de la forme et leur position relative, il s'avère indispensable jusqu'à présent de munir la face galbée de la forme supérieure destinée à être en contact avec les feuilles d'un revêtement intercalaire qui, tendu, épouse ses contours. Celui-ci, par sa souplesse et sa surface lisse, adoucit le contact verre/forme, notamment en "gommant" les petites imperfections de surface de la forme qui peuvent subsister malgré un usinage soigneux. En outre, s'il présente un caractère moelleux, il est apte à absorber les poussières qui risqueraient d'être prises au piège entre forme et verre, et de laisser alors leur empreinte sur le verre ramolli.

Différents types de revêtement remplissant ces fonctions, dont notamment ceux décrits dans les demandes de brevet EP-A-312 439, FR-A-2 606 398 et FR-A-2 644 156, essentiellement à base de tissus ou tricots métalliques.

Mais même si leurs performances sont satisfaisantes, leur usure progressive nécessite de les remplacer périodiquement et assez fréquemment, vues d'une part les contraintes mécaniques qu'on leur fait subir, et plus particulièrement lorsque l'on prévoit une étape de pressage, et d'autre part les très hautes températures (au moins 650°C) atteintes par la forme supérieure et globalement par la cellule de bombage, qui provoquent un phénomène d'oxydation accéléré du métal desdits revêtements.

Or, ces revêtement sont couramment fixés de manière amovible en partie haute de la forme supérieure, où sont disposés régulièrement des moyens pour l'accrocher sous tension.

Cela signifie qu'un opérateur ne peut procéder au remplacement de l'intercalaire que hors de la cellule, à la fois à cause de la chaleur régnante et du peu d'accessibilité latérale de la partie haute de la forme logée dans la jupe, et ceci est d'autant moins envisageable que la forme se trouve d'avantage incluse dans la jupe. L'opérateur doit donc arrêter la production, dégager de la cellule de bombage l'ensemble de la forme supérieure et de la jupe, toutes deux par exemple rattachées à un plateau amovible, effectuer le changement après avoir laissé la forme et la jupe retomber à température ambiante, puis replacer le tout dans la cellule et attendre le laps de temps nécessaire pour que ces outils atteignent la température voulue. Outre le temps d'interruption de production non négligeable que toutes ces manipulations impliquent, il faut également compter le temps de réglage indispensable qui suit chaque remplacement, dû au fait que l'on ne peut garantir totalement que l'opérateur replace l'ensemble du plateau, de la jupe et de la forme exactement où il se trouvait précédemment, au millimètre près. Un repositionnement non identique risquerait sinon de provoquer un léger décentrage, notamment de la forme supérieure et de la jupe par rapport à une forme annulaire inférieure de pressage, qui, même s'il reste dans les limites de tolérance, ne pourrait permettre de produire des séries de feuilles bombées de manière exactement similaire, ce qui est toujours souhaité.

Le but de l'invention est alors d'obvier à tous ces inconvénients en proposant une opération de changement de revêtement intercalaire qui soit notamment beaucoup plus simple, beaucoup plus courte, sans pour autant sacrifier la qualité et la reproductibilité du procédé de bombage.

Les auteurs de l'invention ont alors proposé de rendre indépendants de la forme supérieure les moyens d'accrochage permettant de tendre le revêtement intercalaire contre celle-ci. Il devient alors possible d'effectuer le changement du revêtement hors de la cellule de bombage en évacuant simplement lesdits moyens d'accrochage équipés du revêtement à substituer. Il n'est donc plus nécessaire de faire sortir simultanément de la cellule la forme supérieure à laquelle ces moyens d'accrochage ne sont plus solidarisés de manière fixe, ainsi que le plateau muni de la jupe auquel elle est elle-même usuellement fixée.

L'invention a donc pour objet un dispositif de bombage de feuilles de verre comportant un four de réchauffage du verre, un convoyeur, une cellule de bombage dans laquelle est suspendue, notamment à un plateau, une forme supérieure de bombage au moins en partie disposée dans la jupe d'un caisson de dépressurisation périphérique et dont la face inférieure est couverte d'un revêtement, ce revêtement étant supporté par un dispositif d'accrochage amovible par des moyens mécaniques et non solidaires de la forme supérieure.

Ce dispositif d'accrochage présente selon les modes différents de réalisation de l'invention différentes formes de réalisation, mais comporte au moins un élément qualifié de cadre-support muni de dispositifs de fixation du revêtement, tels que de simples picots métalliques. Ledit cadre est disposé soit à l'intérieur du volume défini par les parois de la jupe, soit à l'extérieur, et de préférence relié de manière amovible à celle-ci, soit directement, soit par l'intermédiaire d'une jupe "inférieure" ou "déflecteur" amovible par rapport à cette jupe et achevant en partie inférieure le profil de celle-ci.

De préférence, le cadre-support est disposé de manière à autoriser une dépressurisation libre entre celui-ci et les parois de la jupe.

Dans un cas comme dans l'autre, le positionnement de l'ensemble des dispositifs d'accrochage dans la cellule de bombage, notamment par rapport à la forme supérieure et/ou la forme inférieure annulaire, est assuré par des systèmes d'indexage appropriés.

Les avantages de l'invention sont immédiats : il est beaucoup moins complexe de n'évacuer, lors de l'opération de changement d'intercalaire, que ce dispositif d'accrochage, à structure légère, plutôt que l'ensemble plateau/forme supérieure/jupe. Et ceci est d'autant plus évident que les auteurs de l'invention ont pris soin de concevoir des liaisons entre ce dispositif d'accrochage et la partie haute de la cellule qui soient amovibles de manière très aisée par un opérateur, comme les figures l'illustreront ci-dessous.

La forme pleine peut ainsi rester constamment dans la cellule à température homogène, sans subir de gicle thermique d'amplitude très importante à chaque opération de changement d'intercalaire, ce qui assure à la fois un gain de temps et un bombage de la feuille correct.

En outre, et c'est probablement là l'avantage primordial de l'invention, on écarte tout risque de repositionnement décalé de la forme supérieure de bombage, notamment par rapport à une forme annulaire inférieure de pressage ou de pressage/trempe. On garde ainsi intacts tous les réglages de positionnement relatifs des différents outillages de bombage.

D'autres caractéristiques avantageuses de l'invention ressortent de la description de deux modes de réalisation préférés de l'invention, faite ci-après à l'aide des dessins annexés qui représentent :
Figure 1 : une coupe transversale de face et schématique de la partie supérieure d'une cellule de bombage selon le premier mode de réalisation de l'invention.
Figure 2 : une vue de dessous et schématique de la fixation du cadre-support à la jupe, conformément à la figure 1.
Figure 3 : une coupe transversale de face et schématique de la partie supérieure d'une cellule de bombage selon le deuxième mode de réalisation de l'invention.

On précise tout d'abord qu'on utilise dans le cadre de l'invention tout type de revêtement usuellement utilisé pour les formes supérieures de bombage, et notamment un de ceux décrits dans les brevets cités précédemment.

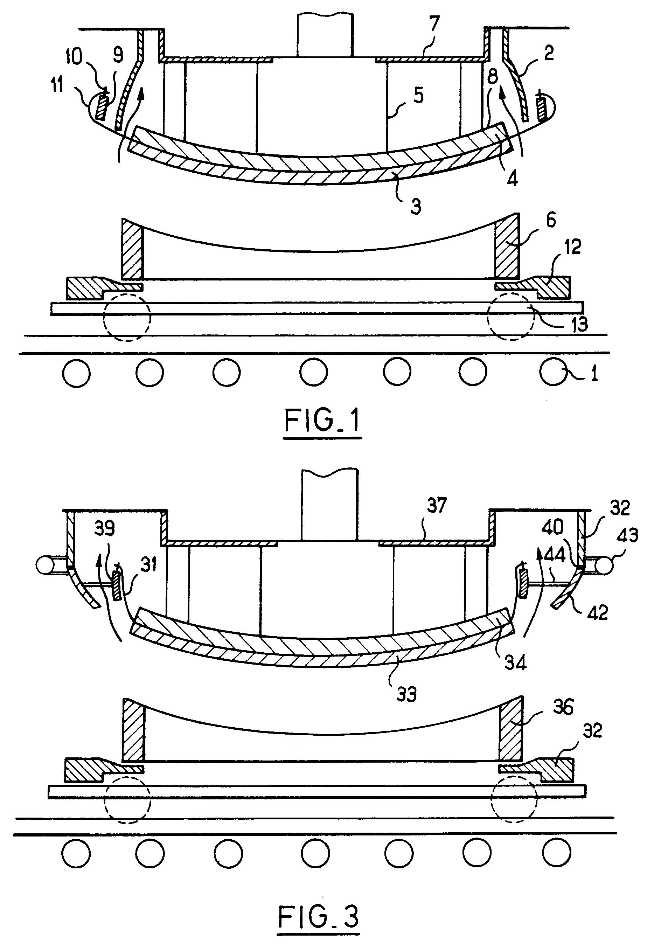

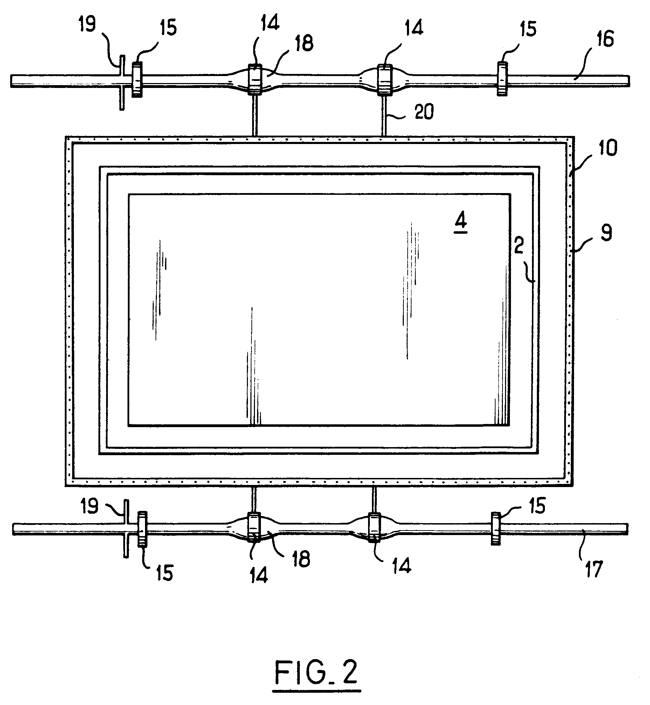

Le premier mode de réalisation de l'invention concerne les figures 1 et 2, et utilise une jupe du type "court" ou "affleurante" connue du brevet EP-A-241 355.

La figure 1 est une coupe transversale très schématique d'une cellule de bombage selon l'invention, qui vient s'inscrire de manière bien connue dans une installation de bombage. Celle-ci comporte à la suite des uns des autres, et dans l'ordre de passage pour une feuille de verre, un poste de chargement des feuilles de verre sur un convoyeur, un four horizontal traversant dans lequel les feuilles de verre sont réchauffées à plat tout en étant véhiculées par le convoyeur et dont elles ressortent après avoir atteint une température égale à leur température de bombage et/ou de trempe, la cellule de bombage proprement dite dans laquelle la température des feuilles de verre est au moins maintenue constante et une cellule de refroidissement notamment par trempe thermique, des moyens étant de plus prévus pour le transfert des feuilles de verre de la station de bombage à la station de refroidissement.

Les feuilles de verre pénètrent dans la cellule de bombage par un convoyeur par exemple constitué par une série de rouleaux moteurs 1.

La cellule de bombage comporte essentiellement un caisson de dépression périphérique, muni d'une jupe 2 constituant ses parois latérales, et relié à un dispositif d'aspiration (non représenté) de manière à créer une dépression au voisinage de la périphérie de la feuille. La figure 1 représente la feuille 3 déjà plaquée contre la surface galbée de la forme supérieure pleine 4 en acier inoxydable, elle même disposée de manière à ce que ladite surface se trouve hors du volume intérieur délimité par la jupe 2. Des tiges de fixation 5 montées à l'intérieur de la jupe 2 suspendent la forme pleine 4 à un plateau 7, auquel est également fixée la jupe 2. Ledit plateau 7 est amovible horizontalement, car il coulisse à la manière d'un "tiroir" à l'intérieur d'une pièce évidée non représentée. Il peut en outre être animé d'un mouvement vertical permettant notamment, en position haute, de dégager suffisamment d'espace pour faire pénétrer une forme inférieure annulaire 6. Celle-ci est fixée sur un cadre porteur monté sur un chariot mobile 12, 13. Elle participe au bombage de la feuille de verre 3 par une opération de pressage mécanique contre la forme pleine 4, et, en outre l'évacue vers la cellule de trempe, une fois le bombage achevé. Intervenant dans le pressage, cette forme annulaire est nécessairement réglée en assiette et en concentricité par rapport à la forme supérieure pleine, soit un pré-réglage très précis dont vont se servir les auteurs de l'invention. Il va de soi qu'une forme de trempe spécifique pourrait prendre son relai pour évacuer la feuille.

Pour ce qui concerne l'invention, le revêtement intercalaire 11 de la forme pleine 4 est cette fois non plus fixé sur la zone périphérique 8 supérieure de celle-ci, à l'intérieur de la jupe 2, mais sur un cadre-support 9 muni de picots 10 régulièrement disposés sur sa face supérieure, permettant un accrochage et un décrochage aisés d'un revêtement type tissu ou tricot, ledit cadre-support 9 se trouvant à l'extérieur de la jupe 2 et suspendu au plateau 7 au niveau de celle-ci de manière amovible.

Cette fixation est explicitée par la figure 2, représentant en vue de dessous et très schématiquement la jupe 2, le cadre-support 9 et la forme pleine 4, le cadre-support étant pour des commodités de représentation ici dépourvu de son revêtement. On y voit deux types d'étriers 14, 15 alternés. Les uns 14 sont disposés à l'extérieur du cadre-support 9, en partie supérieure, le long de ses deux côtés opposés les plus longs, à l'aide de barres métalliques transversales 20. Les autres 15 sont disposés à la même hauteur que les précédents, de manière à ce que leurs centres passent par un même axe imaginaire, à la périphérie de la jupe 2 dans sa partie la plus basse sur les deux mêmes côtés. Ils sont solidarisés au plateau 7, par des barres métalliques verticales non représentées. Deux tirants 16, 17, un pour chacun des côtés, sont glissés à travers ces deux types d'étriers 14, 15, de manière à solidariser le cadre-support 9 au plateau 7 et ainsi de le référencer exactement autour de la jupe 2 qui y est rattachée. Les tirants 16, 17 sont constitués de tiges métalliques présentant de préférence des renflements 18 répartis sur toute leurs longueurs, de manière à assurer une fixation stable après mise en place, ainsi qu'un disque 19 de fin de course à l'une de leurs extrémités.

L'opération de changement d'intercalaire se déroule de la manière suivante : on amène dans la cellule de bombage une forme inférieure 6 annulaire de pressage/trempe sur son chariot mobile 12, 13. On simule un pressage entre la forme supérieure pleine 4 et cette forme inférieure annulaire 6 par descente du plateau 7 soutenant la forme pleine 4, puis, une fois les deux formes en contact, l'opérateur retire aisément les tirants 16, 17 de manière à faire entièrement reposer le cadre-support 9 sur des plots disposés sur le cadre porteur 12 de la forme annulaire inférieure 6, plots que l'on décrira ultérieurement et qui permettent le calage des deux outils. Le chariot 13 évacue ensuite l'ensemble hors de la cellule de bombage. On procède ensuite au remplacement de l'intercalaire 11 proprement dit : on décroche le revêtement intercalaire 11 usagé des picots 10 du cadre-support 9. Puis, afin de garantir une tension suffisante du nouveau revêtement au contact de la forme pleine 4, on réengage un nouveau revêtement en s'aidant d'une jupe et d'une forme pleine en tous points identiques à celles de la cellule de bombage, mais à température ambiante bien évidemment. Une fois le nouveau revêtement installé de manière adéquate sur son cadre-support 9, on positionne exactement le cadre-support 9 par rapport au cadre porteur 12 de la forme annulaire 6 à l'aide de plots qui sont réglables en hauteur et amovibles, disposés à la périphérie du cadre porteur 12 et susceptibles de s'enclencher dans des organes femelles disposées en regard sur le contour extérieur du cadre-support 9.

En effet, est déjà assuré par des pré-réglages précédant tout lancement de production le positionnement de la forme inférieure 6 par rapport à la jupe 2 et à la forme pleine 4, aussi bien en assiette qu'en concentricité, comme déjà évoqué précédemment. En centrant ainsi le cadre-support 9 par rapport à la forme inférieure 6, on le positionne donc également exactement par rapport à la jupe 2 et à la forme pleine 4.

Ensuite, il suffit de faire entrer à nouveau sur le chariot mobile 13 le cadre porteur 12 de la forme inférieure 6 sur lequel est calé le cadre support 9 muni du nouveau revêtement, de simuler de nouveau un pressage de manière à aligner les étriers 15 autour de la jupe et ceux 14 du cadre-support, d'y faire glisser les tirants 16, 17 pour verrouiller en position l'ensemble, puis d'évacuer la forme inférieure 6 sur son chariot 13. L'alignement des étriers 14, 15 est réalisé sans problème dans la mesure où l'on a assuré précédemment le centrage de la jupe 2 et du cadre-support 9.

Les avantages d'une telle technique sont multiples. Tout d'abord elle assure une meilleure sécurité à l'opérateur, puisque celui-ci n'a à manipuler d'une part que des outillages légers, faciles à manipuler tels que les tirants, et d'autre part la jupe et éventuellement la forme "modèles" froides qui servent à adopter un accrochage correct du nouvel intercalaire. Certes, le cadre-support évacué et les tirants restent chauds, mais d'une part, ils se refroidissent très vite, alors que la chaleur résiduelle d'une forme pleine ou d'une jupe est considérablement plus importante. D'autre part, il n'est plus nécessaire d'attendre que le cadre-support soit complètement à température ambiante, dans la mesure où cette fois, lors du changement du revêtement intercalaire, il n'y a plus de problème d'accessibilité limitée, puisque le cadre-support est complètement dégagé. Et lorsque l'on replace le nouveau revêtement, la jupe et la forme "modèles", comme il a déjà été dit, sont froides et autorisent donc des tatônnements sans aucun inconvénient.

En outre, grâce au système d'indexage utilisant des plots réglables, on conserve intacts les réglages de positionnement entre jupe, forme annulaire de pressage et forme pleine, épargnant les réglages longs et fastidieux qui suivaient tout changement de revêtement.

Avec ce premier mode de réalisation, par rapport à la technique utilisée jusqu'ici qui nécessitait plusieurs heures pour l'opération complète, un tel système permet de changer de revêtement intercalaire en moins de 15 mn pour des outils de bombage de taille suffisante pour des vitrages du type pare-brise automobile, voire de 5 mn pour des outils de bombage de taille moindre, notamment adaptés à la fabrication de petits vitrages type custodes pour automobile. Ceci se traduit par un gain de rendement tout à fait sensible avec une bonne reproductibilité de bombage puisque tous les outillages restent correctement positionnés les uns par rapport aux autres.

Il est également possible dans ce mode de réalisation de fixer le cadre-support 9 à la jupe 2 à l'intérieur de celle-ci, le cadre-support 9 présentant alors un contour de dimensions inférieures à celles de la jupe. On prévoit alors tous autres types de fixation mécanique amovible du cadre-support permettant de le positionner par rapport à la jupe, comme des systèmes de verrouillage par emboîtements, ressorts ..., à partir du moment où on les choisit adaptés à une utilisation à haute température.

Cependant, dans le cas où l'on place le cadre-support 9 autour de la jupe 2, ce qui correspond au positionnement jupe/cadre-support le plus simple, l'aspiration périphérique doit nécessairement s'opérer à travers le revêtement intercalaire, ce qui nécessite d'utiliser un revêtement 11 particulièrement poreux à l'air, éventuellement en ménageant dans sa zone périphérique des oeillets d'ouverture.

C'est pourquoi les auteurs de l'invention ont proposé un second mode de réalisation illustré par la figure 3, tout aussi rapide et efficace que le premier, mais qui ménage cette fois un espace d'aspiration périphérique libre.

En préservant ainsi un canal d'aspiration, on peut alors très avantageusement s'autoriser à utiliser des revêtements intercalaires denses, à la texture serrée, c'est-à-dire les revêtements qui garantissent le contact optimum avec le verre en diminuant son risque d'être marqué.

La figure 3 représente la partie haute de la cellule de bombage, en coupe transversale et de manière tout à fait schématique, comme la figure 1. On y retrouve les mêmes éléments, soient un plateau 37, une forme pleine 34, une jupe 32, 42, le cadre-support 39 sur lequel est tendu de la même manière le revêtement intercalaire 31. Mais deux caractéristiques diffèrent.

Tout d'abord, cette fois le cadre-support 39 se trouve systématiquement logé dans la jupe 32, 42, il a un contour de dimensions sensiblement inférieures à celles de la jupe 32, 42 sur toute sa hauteur. De cette manière, est dégagé un espace latéral libre entre le revêtement 31 et les parois de la jupe 32, 42 permettant une aspiration de la feuille de verre 33 aussi efficace que lorsque le revêtement 31 était directement fixé sur la forme pleine 34.

Mais grâce à une nouvelle conception de la jupe 32, 42, le fait que le cadre-support 39 soit dans celle-ci ne pose pas de problème d'accessibilité. En effet, la jupe 32, 42 est scindée en deux parties : une jupe 32 qualifiée de "supérieure", qui est fixée sur le plateau, et une jupe amovible 42 retenant le cadre-support 39 et qualifiée d'"inférieure" ou de "déflecteur", qui s'adapte aux contours de la jupe supérieure 32 par l'intermédiaire d'un joint d'étanchéité 40 en matériau réfractaire. Alors que la jupe 32 supérieure a des parois sensiblement verticales, la jupe inférieure ou déflecteur 42 présente un profil particulier relativement évasé vers le haut, afin de dégager un volume intérieur global de la jupe 32, 42 toute entière suffisamment important pour ne pas entraîner de pertes de charges lors de l'aspiration, dûes à la présence dans la jupe d'un outil supplémentaire : le cadre-support 39. En minimisant en outre, tout risque de fuite latérale par un rétrécissement approprié de la jupe inférieure 42 dans sa partie la plus basse, on optimise l'écoulement fluidique à la périphérie de la forme pleine 34. Il va de soi que des types de profils de jupe 32, 42 un peu différents peuvent être adoptés cependant.

La jonction des deux jupes 32 et 42 se fait par un système de fixation symbolisé 43 comportant des étriers extérieurs fixés par des barres métalliques transversales et des tirants non représentés de manière parfaitement équivalente à la fixation entre plateau 7 et cadre-support 9 au niveau de la partie basse de la jupe 2 explicitée dans le premier mode de réalisation illustré par la figure 2.

Quant à la fixation entre la jupe inférieure amovible ou déflecteur 42 et le cadre-support 39, deux choix sont envisageables. Il peut s'agir de simples petites barres métalliques 44 transversales soudées qui, à espaces réguliers, retiennent le cadre-support dans la jupe inférieure, de préférence sensiblement dans sa zone périphérique de jonction avec la jupe supérieure fixe. On peut également prévoir des fixations amovibles (non représentées). On utilise alors toujours des barres transversales, mais cette fois celles-ci peuvent se coincer dans des cavaliers en forme de "U" soudés sur le pourtour intérieur de la jupe inférieure 42, qui assurent le verrouillage des deux pièces, grâce à la tension qu'exerce le revêtement intercalaire, une fois l'ensemble des outils remis en place.

L'opération de changement d'intercalaire peut se dérouler selon deux techniques légèrement différentes.

La première technique ressemble à la précédente, dans la mesure où l'on fait intervenir une forme annulaire de pressage/trempe 36 en simulant un pressage. Mais cette fois, ce n'est plus le cadre-support que l'on décroche de la jupe en le faisant reposer sur le cadre porteur de la forme annulaire, mais toute la jupe inférieure ou déflecteur 42 elle-même retenant le cadre-support 39 : il suffit à l'opérateur de retirer les tirants latéraux. Un système de plots réglables, présents sur le cadre porteur 32, et d'organes femelles en regard à la périphérie de la jupe inférieure 42 permet comme précédemment de caler celle-ci par rapport au cadre porteur 32. Puis, hors de la cellule, on procède au changement de revêtement intercalaire 31 et à sa mise sous tension adéquate à l'aide d'une forme pleine froide.

Une variante consiste à changer non plus seulement le revêtement intercalaire 31 seul, mais à la fois le cadre-support 39 et l'intercalaire 31. Dans ce cas, est utilisée la fixation amovible entre cadre-support 39 et jupe inférieure 42. Deux cadres-support sont alors nécessaires, un premier utilisé effectivement dans la cellule de bombage, et un second, muni à l'avance hors de la cellule d'un revêtement intercalaire neuf. Il suffit ensuite de permuter simplement les deux cadres, ce qui assure un gain de temps tout à fait sensible. La remise en place de la jupe inférieure 42 se fait toujours sur les plots du cadre porteur 32 de la forme annulaire 36, ce qui assure un parfait positionnement de la jupe inférieure 42 et du cadre-support 39 par rapport à la forme annulaire 36, et donc par rapport à la forme pleine 34 et à la jupe supérieure 32, sans réglages supplémentaires.

La deuxième technique permet d'assurer une même exactitude dans le positionnement des divers outillages, sans utiliser pour cela le cadre porteur 32 de la forme annulaire 36 comme transporteur de la jupe inférieure 42. Elle consiste, pour retirer de la cellule et mettre en place la jupe inférieure 42 et le cadre support 39, à utiliser cette fois une servante spécifique. Celle-ci est translatée à l'aide de "bras" qu'un opérateur peut manipuler afin d'assurer le transport de la jupe inférieure 42. Afin de garantir un bon centrage, deux systèmes de positionnement sont prévus.

Un premier système comporte des plots et organes femelles en regard, les premiers sur la servante et les seconds sur le pourtour de la jupe inférieure 42, les plots de la servante étant montés sur ressorts afin de permettre une certaine latitude de mouvement relatif, aussi bien horizontalement que verticalement, entre les deux outils.

Le deuxième système de positionnement consiste en des index ou couteaux solidaires de la forme supérieure 34 ou éventuellement de la jupe supérieure fixe 32, aptes à coulisser non seulement en fin de course dans des fourchettes solidaires de la forme annulaire inférieure 36, comme cela est décrit dans le brevet FR-A-2 644 776, mais également dans des fourchettes aux extrémités évasées alignées selon un axe vertical avec les précédentes et garnissant le pourtour extérieur de la jupe inférieure 42.

Le positionnement "souple" de la jupe inférieure par rapport à la servante autorise de légers mouvements, latéralement et verticalement, de la jupe par rapport à celle-ci, permettant de "rattraper" un éventuel léger décentrage des fourchettes de la jupe inférieure par rapport aux couteaux correspondants.

Il va de soi que, pour le premier mode de réalisation, tout comme pour le second, tout système d'indexage équivalent à ceux ici décrits, soient des plots et organes femelles et/ou des fourchettes et couteaux, peut être avantageusement utilisé dans le cadre de l'invention. Il en va de même pour les systèmes de fixation type étriers et tirants.

Grâce à l'invention, on peut donc ramener la durée totale de changement d'intercalaire de plusieurs heures à quelques minutes, ce qui, compte-tenu de la fréquence de cette opération, induit un gain important en termes de cadence et de simplicité de mise en oeuvre, avec néanmoins un souci de garder identique la précision du bombage.

## Revendications

1. Dispositif de bombage de feuilles de verre (3, 33) comportant un four de réchauffage du verre, un convoyeur, une cellule de bombage dans laquelle est suspendue, notamment à un plateau (7, 37) une forme supérieure de bombage (4, 34) au moins en partie disposée dans la jupe (2, 32) d'un caisson de dépressurisation périphérique et dont la face inférieure est couverte d'un revêtement (11, 31), **caractérisé en ce que** ledit revêtement (11, 31) est supporté par un dispositif d'accrochage amovible par des moyens mécaniques et non solidaire de la forme supérieure.

2. Dispositif selon la revendication 1, **caractérisé en ce que** le dispositif d'accrochage comporte un cadre-support (9, 39) muni de moyens de fixation (10) du revêtement (11, 31) et solidarisé de manière amovible à la jupe (2, 32, 42) ou au plateau (7, 37).

3. Dispositif selon la revendication 2, **caractérisé en ce que** le cadre-support (9, 39) est situé à l'extérieur du volume défini par les parois de la jupe (2).

4. Dispositif selon la revendication 2, **caractérisé en ce que** le cadre-support (9, 39) est situé à l'intérieur du volume défini par les parois de la jupe (2, 32, 42).

5. Dispositif selon la revendication 4, **caractérisé en ce que** le cadre-support (9, 39) est situé à une distance suffisante des parois de la jupe (2, 32, 42) pour autoriser une dépressurisation libre entre le cadre-support (9, 39) et les parois de la jupe (2, 32, 42).

6. Dispositif selon la revendication 2 ou 3, **caractérisé en ce que** la solidarisation transversale entre jupe (2) ou plateau (7) et cadre-support (9) est assurée par des étriers (14, 15) alignés présents à la périphérie du cadre-support (9) et au niveau de celle de la jupe (2) sur au moins deux de leurs côtés opposés, dans lesquels coulissent des tirants (16, 17).

7. Dispositif selon la revendication 2 à 6, **caractérisé en ce que** le dispositif d'accrochage comporte en outre un déflecteur (42) auquel est relié transversalement le cadre-support (39), achevant en partie inférieure le profil de la jupe (32) et amovible par rapport à celle-ci par des fixations mécaniques (44).

8. Dispositif selon la revendication 7, **caractérisé en ce que** la solidarisation entre déflecteur (42) et jupe (32) est assurée par des étriers à la périphérie des deux pièces sur au moins deux de leurs côtés opposés, dans lesquels coulissent des tirants (43).

9. Dispositif selon la revendication 7 ou 8, **caractérisé en ce que** la liaison transversale entre cadre-support (39) et déflecteur (42) est amovible, notamment assurée par le verrouillage de pattes de liaison dans des cavaliers.

10. Dispositif selon l'une des revendications 1 à 9, **caractérisé en ce que** le dispositif d'accrochage est évacué hors de la cellule par une servante spécifique ou par le système mobile (12, 13) supportant une forme inférieure annulaire (6), notamment de pressage ou de pressage/trempe.

11. Dispositif selon la revendication 10, **caractérisé en ce que** le dispositif d'accrochage est référencé par rapport à son système d'évacuation hors cellule de bombage par un système d'indexage, notamment des plots et organes femelles en regard.

12. Dispositif selon l'une des revendications 1 à 11, **caractérisé en ce que** le dispositif d'accrochage est référencé par rapport à la forme supérieure pleine (4, 34), et éventuellement la forme inférieure annulaire (6), par un système d'indexage, notamment des couteaux solidaires de la forme supérieure (4, 34) glissant dans des fourchettes évasées disposées en regard sur le système d'accrochage et éventuellement d'autres fourchettes solidaires de la forme inférieure annulaire (6).

## Claims

1. Device for bending glass sheets (3, 33), comprising a reheating furnace for the glass, a conveyor, a bending station within which there is suspended, notably from a plate (7, 37), an upper bending mould (4, 34) disposed at least partly inside the skirt (2, 32) of a peripheral suction box and the lower face of which is covered with a covering (11, 31), characterized in that said covering (11, 31) is supported by an attachment device which can be removed by mechanical means and is not integral with the upper mould.

2. Device according to Claim 1, characterized in that the attachment device comprises a support frame (9, 39) provided with fixing means (10) for the covering (11, 31) and fixed in detachable manner to the skirt (2, 32, 42) or to the plate (7, 37).

3. Device according to Claim 2, characterized in that the support frame (9, 39) is situated outside the volume defined by the walls of the skirt (2).

4. Device according to Claim 2, characterized in that the support frame (9, 39) is situated inside the volume defined by the walls of the skirt (2, 32, 42).

5. Device according to Claim 4, chracterized in that the support frame (9, 39) is situated at a sufficient distance from the walls of the skirt (2, 32, 42) to allow a free suction between the support frame (9, 39) and the walls of the skirt (2, 32, 42).

6. Device according to Claim 2 or 3, characterized in that the transverse fixing together of skirt (2) or plate (7) and support frame (9) is assured by aligned stirrups (14, 15) present at the periphery of the support frame (9) and at the level of the periphery of the skirt (2) on at least two of their opposite sides, in which stirrups stays (16, 17) slide.

7. Device according to Claims 2 to 6, characterized in that the attachment device comprises, in addition, a deflector (42) to which the support frame (39) is connected transversely, this deflector completing the profile of the skirt (32) at the lower part and being detachable from the skirt by mechanical fixings (44).

8. Device according to Claim 7, characterized in that the fixing together of deflector (42) and skirt (32) is assured by stirrups at the periphery of these two components on at least two of their opposite sides, in which stirrups stays (43) slide.

9. Device according to Claim 7 or 8, characterized in that the transverse connection between support frame (39) and deflector (42) is releasable, and notably is assured by the locking of connecting lugs in staples.

10. Device according to one of Claims 1 to 9, characterized in that the attachment device is removed outside the station by a specific auxiliary device or by the movable system (12, 13) carrying an annular lower mould (6), notably pressing or pressing/toughening mould.

11. Device according to Claim 10, characterized in that the attachment device is referenced relative to its system for discharging from the bending station by an indexing system, notably studs and facing female elements.

12. Device according to one of Claims 1 to 11, characterized in that the attachment device is referenced relative to the upper mould (4, 34) and, possibly also, the annular lower mould (6), by an indexing system, notably knives fixed to the upper mould (4, 34) sliding in recessed forks disposed opposite on the attachment system and possibly other forks integral with the annular lower mould (6).

## Patentansprüche

1. Vorrichtung zum Biegen von Glasscheiben (3, 33), die einen Glaserwärmungsofen, einen Förderer und eine Biegezelle umfaßt, in welcher man insbesondere an einer Platte (7, 37) eine obere Biegeform (4, 34) aufgehängt hat, die wenigstens teilweise in der Schürze (2, 32) eines peripheren Unterdruckkastens angeordnet und deren Unterseite mit einem Überzug (11, 31) bedeckt ist, **dadurch gekennzeichnet, daß** der Überzug (11, 31) von einer Halteeinrichtung getragen wird, die durch mechanische Mittel lösbar und mit der oberen Form nicht fest verbunden ist.

2. Vorrichtung nach Anspruch 1, **dadurch gekennzeichnet, daß** die Halteeinrichtung einen Tragrahmen (9, 39) umfaßt, der mit Befestigungsmitteln (10) für den Überzug (11, 31) ausgerüstet und lösbar mit der Schürze (2, 32, 42) oder Platte (7, 37) verbunden ist.

3. Vorrichtung nach Anspruch 2, **dadurch gekennzeichnet, daß** sich der Tragrahmen (9, 39) außerhalb des Rauminhaltes befindet, der von den Wänden der Schürze (2) gebildet wird.

4. Vorrichtung nach Anspruch 2, **dadurch gekennzeichnet, daß** sich der Tragrahmen (9, 39) innerhalb des Rauminhaltes befindet, der von den Wänden der Schürze (2, 32, 42) gebildet wird.

5. Vorrichtung nach Anspruch 4, **dadurch gekennzeichnet, daß** sich der Tragrahmen (9, 39) in einem Abstand von den Wänden der Schürze (2, 32, 42) befindet, der ausreichend ist, um zwischen dem Tragrahmen (9, 39) und den Wänden der Schürze (2, 32, 42) einen Unterdruck frei aufbauen zu können.

6. Vorrichtung nach Anspruch 2 oder 3, **dadurch gekennzeichnet, daß** die Querbefestigung zwischen Schürze (2) oder Platte (7) und Tragrahmen (9) von ausgerichteten Bügeln (14, 15) sichergestellt wird, die am Umfang des Tragrahmens (9) und in Höhe des Umfangs der Schürze (2) an wenigstens zwei ihrer einander gegenüberliegenden Seiten vorhanden sind und in denen Zugstangen (16, 17) hin- und hergehen.

7. Vorrichtung nach den Ansprüchen 2 bis 6, **dadurch gekennzeichnet, daß** die Halteeinrichtung außerdem eine Leiteinrichtung (42) umfaßt, an welcher der Tragrahmen (39) quer befestigt ist, die den unteren Teil des Profils der Schürze (32) abschließt und in bezug auf sie mittels mechanischer Befestigungen (44) lösbar ist.

8. Vorrichtung nach Anspruch 7, **dadurch gekennzeichnet, daß** die Verbindung zwischen der Leiteinrichtung (42) und der Schürze (32) durch Bügel, in denen Zugstangen (43) hin- und hergehen, am Umfang der beiden Bauteile an wenigstens zwei ihrer einander gegenüberliegenden Seiten sichergestellt wird.

9. Vorrichtung nach Anspruch 7 oder 8, **dadurch gekennzeichnet, daß** die Querverbindung zwischen Tragrahmen (39) und Leiteinrichtung (42) lösbar und insbesondere durch das Einrasten von Verbindungsriegeln in Reitern sichergestellt ist.

10. Vorrichtung nach einem der Ansprüche 1 bis 9, **dadurch gekennzeichnet, daß** die Halteeinrichtung von einem speziellen Wagen oder dem beweglichen System (12, 13), das eine untere Ringform (6), insbesondere eine Preß oder Preß-/Vorspannform trägt, aus der Zelle herausgezogen wird.

11. Vorrichtung nach Anspruch 10, **dadurch gekennzeichnet, daß** die Halteeinrichtung in bezug auf ihr System, das sie aus der Biegezelle zieht, von einem Rastsystem, insbesondere Stiften und ihnen gegenüberstehenden Aufnahmeelementen, festgelegt wird.

12. Vorrichtung nach einem der Ansprüche 1 bis 11, **dadurch gekennzeichnet, daß** die Halteeinrichtung in bezug auf die obere Vollform (4, 34) und gegebenenfalls die untere Ringform (6) von einem Rastsystem und insbesondere von mit der oberen Form (4, 34) fest verbundenen Messern festgelegt wird, die in nach oben erweiterten Führungen, welche gegenüber an der Halteeinrichtung angeordnet sind, und gegebenenfalls in anderen Führungen gleiten, die fest mit der unteren Ringform (6) verbunden sind.
